# EUROPÄISCHE PATENTSCHRIFT

(11) **EP 0 537 473 B1**
(45) Veröffentlichungstag und Bekanntmachung des Hinweises auf die Patenterteilung: **08.04.1998**
(21) Anmeldenummer: 92115403.5
(22) Anmeldetag: 09.09.1992
(51) Int. Cl.: B01D 5/00, B01D 7/02, B01D 9/00

(54) **Verfahren und Vorrichtung zur Rückgewinnung von Lösungsmitteln aus Abgasen**
Process and apparatus for the recovery of solvents from waste air or gas
Procédé et dispositif pour la récupération de solvants d'air ou de gaz d'échappement

(30) Priorität: 17.10.1991 DE 4134293
(43) Veröffentlichungstag der Anmeldung: 21.04.1993
(73) Patentinhaber: MESSER GRIESHEIM GMBH, 60547 Frankfurt (DE)
(72) Erfinder: Herzog, Friedhelm, Dr., W-4150 Krefeld (DE); Kutz, Thomas, W-4060 Viersen (DE); Schlömer, Franz-Robert, W-4047 Dormagen 11 (DE); Schmidt, Heinz Josef, W-4047 Dormagen 1 (DE); Schulte-Rewinkel, Martin, W-4156 Willich 3 (DE)

(56) Entgegenhaltungen:
- GB-A- 874 866
- US-A- 2 583 013
- US-A- 2 607 440
- US-A- 2 696 718

## Beschreibung

Die Erfindung betrifft ein Verfahren zur Rückgewinnung von Lösungsmitteln aus Abgasen durch Kondensieren, Ausfrieren und/oder Sublimieren nach dem Oberbegriff des Anspruches 1.

Zur Rückgewinnung von Lösungsmitteln aus Abgasen bzw. zur Abgassreinigung dienen Kondensatorkühler oder rekuperative Kältespeicher, die von dem Abgas durchströmt werden, wobei die Lösungsmittel auskondensieren und ausgefrieren. Sobald genügend Lösungsmittel abgeschieden sind, wird der Abgasstrom über eine andere Gruppe von Kondensatorkühlern geleitet. Die erste Gruppe wird erwärmt und das Lösungsmittel kann als flüssiges Produkt abgezogen werden. Eine derartige Einrichtung zeigt beispielsweise die DE-A-34 14 246.

In der GB-A-874 866 ist ein Verfahren und Vorrichtung zur Kühlung und Entfernung von kondensierten Verunreinigungen aus einem erwärmten Abgas durch indirekten Wärmeaustausch mit Hilfe eines kälteren Reingases beschrieben, wobei die kondensierbaren Bestandteile in einem mit Kugeln gefüllten Wärmetauscher abgetrennt werden. Ferner ist in der US-A-2 696 718 ein Verfahren zur Luftverlegung offenbart, bei dem die einströmende Luft von H₂O und CO₂ befreit wird mit Hilfe von Wärmaustauschern durch Ausfrieren, wobei die Wärmetauscher mit Kugeln gefüllt sind.

Die Verfahren nach dem Stand der Technik arbeiten zwar befriedigend, sie benötigen jedoch einen hohen apparativen Aufwand, da eine Doppelanlage zum Ausfrieren und Abtauen der Lösungsmittel erforderlich ist. Für den Wechselbetrieb ist zudem ein hoher Energieaufwand nötig.

Der Erfindung liegt daher die Aufgabe zugrunde, ein Verfahren zur Rückgewinnung von Lösungsmitteln aus Abgasen bzw. zur Abgasreinigung zu schaffen, welches kontinuierlich, d.h. ohne Wechselbetrieb, durchgeführt werden kann.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Der Erfindungsgedanke besteht demnach darin, abgekühlte Formkörper, beispielsweise Stahlkugeln, kontinuierlich durch einen Formkörperspeicher laufen zu lassen. Im Gegenstrom dazu strömt das zu reinigende Abgas durch den Formkörperspeicher. Das Abgas kühlt sich hierbei soweit an den Formkörpern ab, daß die Lösungsmittel bzw. sonstige zu entfernende Dämpfe abgeschieden werden. Das in fester Form abgeschiedene Lösungsmittel gelangt zusammen mit den Formkörpern in den unteren Teil des Formkörperspeichers und schmilzt, da hier höhere Temperaturen vorliegen. Das geschmolzene Eis tropft zusammen mit dem angefallenen Kondensat ab und wird nach außen abgezogen. Die angewärmten Formkörper werden über eine Schleuse aus dem Formkörperspeicher entfernt und zurück zum Eingang des Formkörperspeichers gefördert. Hierbei werden sie in einem Wärmeaustauscher abgekühlt, der beispielsweise mit flüssigem Stickstoff als Kältemittel betrieben werden kann. Bei einer bevorzugten Ausführungsform durchlaufen die Formkörper vor der Abkühlung im Wärmeaustauscher noch eine zusätzliche Schüttung, in welcher sie vom kalten gereinigten Abgas durchströmt und vorgekühlt werden. Diese Schüttung kann auch noch durch verdampften Stickstoff aus dem Wärmeaustauscher gekühlt werden. Bei einer weiteren bevorzugten Ausführungsform durchlaufen die aus dem Formkörperspeicher entnommenen Formkörper einen Trockner, bevor sie in die Fördereinrichtung gelangen.

Bei herkömmlichen Rückgewinnungsverfahren besteht der Nachteil, daß durch das Ausfrieren der Lösungsmittel der Druckverlust in den Apparaten ständig steigt und somit eine instationäre Betriebsweise vorliegt. Nach kurzer Zeit ist der Druckverlust so hoch, daß der Abgasstrom auf einen zweiten Apparat geschaltet werden muß, während der erste aufgewärmt und abgetaut wird. Die hiermit verbundenen Kälteverluste, die zusätzlich erforderliche Heizenergie und der Aufwand für die Apparate und die Abgasumschaltung werden bei dem erfindungsgemäßen Verfahren vermieden, da wegen des kontinuierlichen Transports der Formkörper vom kalten zum warmen Ende des Formkörperspeichers ein Zufrieren unmöglich ist. Alle Verfahrensschritte laufen simultan und kontinuierlich ab, so daß Vorrichtungen gemäß dem erfindungsgemäßen Verfahren stationär betrieben werden können.

Zwei Ausführungsbeispiele sollen anhand der beigefügten Zeichnungen erläutert werden.

Es zeigen:
- Fig. 1: in schematischer Form eine Einrichtung zur Durchführung des Verfahrens, welche Einrichtung jedoch nicht zur Erfindung gelöst,
- Fig. 2: eine Abwandlung der Einrichtung nach Fig. 1 mit einer zusätzlichen Schüttung.

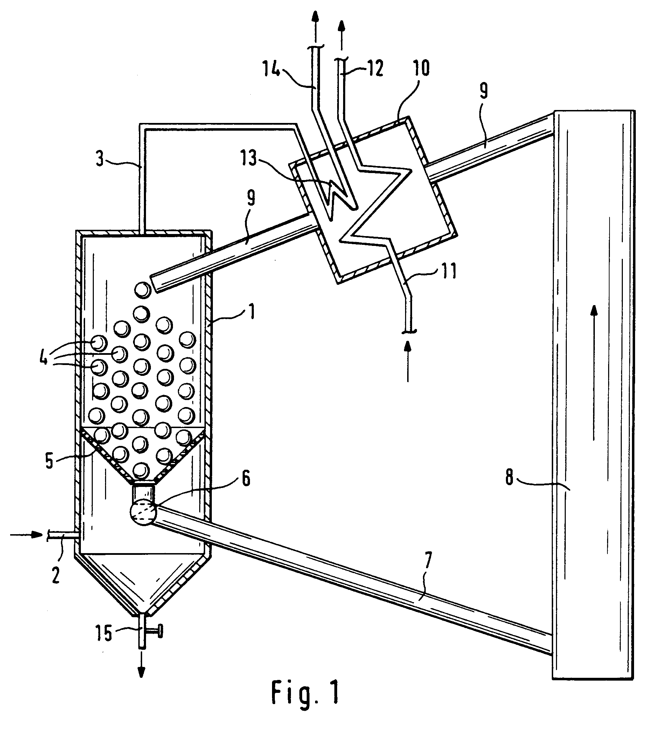

Die in Fig. 1 dargestellte Einrichtung besteht aus einem Formkörperspeicher 1, der in seinem unteren Teil einen Anschluß 2 zur Abgaszufuhr und in seinem oberen Teil einen Anschluß 3 zur Abgasentnahme besitzt. Der mittlere Teil des Formkörperspeichers 1 ist mit Formkörpern 4 gefüllt, welche als Stahlkugeln ausgebildet sind. Die Formkörper 4 liegen auf einem trichterförmigen Lochblech 5, welches in einer Schleuse 6 zur Formkörperentnahme endet. An die Schleuse 6 ist ein Entnahmerohr 7 angeschlossen, welches zu einer Fördereinrichtung 8 für die Formkörper führt. Entsprechend verläuft von der Fördereinrichtung 8 ein Aufgaberohr 9 zurück in den oberen Bereich des Formkörperspeichers 1. Das Aufgaberohr 9 wird von einem Wärmeaustauscher 10 unterbrochen. Der Wärmeaustauscher 10 besitzt einen Anschluß 11 zur Zufuhr von flüssigem Stickstoff als Kältemittel und einen Anschluß 12 zum Entfernen von verdampftem gasförmigen Stickstoff. In dem Wärmeaustauscher 10 befindet sich ferner eine Kühlfläche 13, die mit dem Anschluß 3 verbunden ist und von der ein Anschluß 14 aus dem Wärmeaustauscher 10 herausführt. Am Boden des Formkörperspeichers 1 befindet sich ein Ablaß 15 zur Kondensatentnahme. Die nicht mit Positionsziffern versehenen Pfeile geben die Richtung der Stoffströme an.

Nachfolgend wird das Verfahren zur Lösungsmittelrückgewinnung aus Abgas mit der in Fig. 1 dargestellten Einrichtung beschrieben.

Aus der Fördereinrichtung 8 gelangen Formkörper 4 durch das Aufgaberohr 9 in den Formkörperspeicher 1, in welchem sie eine Schüttung bilden, welche auf dem Lochblech 5 aufliegt. Das Aufgaberohr 9 ist von einem Wärmeaustauscher 10 unterbrochen, in welchem die Formkörper 4 abgekühlt werden. Die Abkühlung erfolgt durch flüssigen Stickstoff, welcher durch den Anschluß 11 in den Wärmeaustauscher 10 eingeführt wird und in gasförmiger Form durch den Anschluß 12 abgeführt wird. Eine zusätzliche Kühlung der Formkörper 4 erfolgt an der Kühlfläche 13, welche von kaltem gereinigten Abgas aus dem Formkörperspeicher 1 beaufschlagt wird. Mittels der Schleuse 6 werden die Formkörper 4 durch das Entnahmerohr 7 der Fördereinrichtung 8 wieder zugeführt. Die Entnahmemenge der Formkörper 4 wird durch die Betriebsweise der Schleuse 6 geregelt. Die Formkörper 4 bewegen sich daher kontinuierlich durch den Formkörperspeicher 1 von oben nach unten.

Das mit Lösungsmitteln beladene Abgas gelangt durch den Anschluß 2 in den unteren Teil des Formkörperspeichers 1. Es strömt dann im Gegenstrom zu den Formkörpern 4 durch den Formkörperspeicher 1 nach oben und verläßt diesen durch den Anschluß 3. Hierbei kühlt sich das Abgas an den Formkörpern 4 soweit ab, das die Lösungsmittel ausfrieren. Das Lösungsmitteleis gelangt zusammen mit den Formkörpern in den unteren Teil des Formkörperspeichers 1 und schmilzt dort, da hier höhere Temperaturen vorliegen. Das geschmolzene Eis tropft zusammen mit dem im unteren Apparateteil angefallenen Kondensat ab und wird durch den Ablaß 15 nach außen abgezogen. Die durch den Abgasstrom angewärmten Formkörper 4 gelangen durch die Schleuse 6 und das Entnahmerohr 7 wieder in die Fördereinrichtung 8, während das kalte gereinigte Abgas durch den Anschluß 3, die Kühlfläche 13 und den Anschluß 14 die Anlage verläßt. Das kalte gereinigte Abgas kann selbstverständlich auch dirket durch den Anschluß 3 entnommen werden, ohne daß seine Kälte im Wärmeaustauscher 10 ausgenutzt wird.

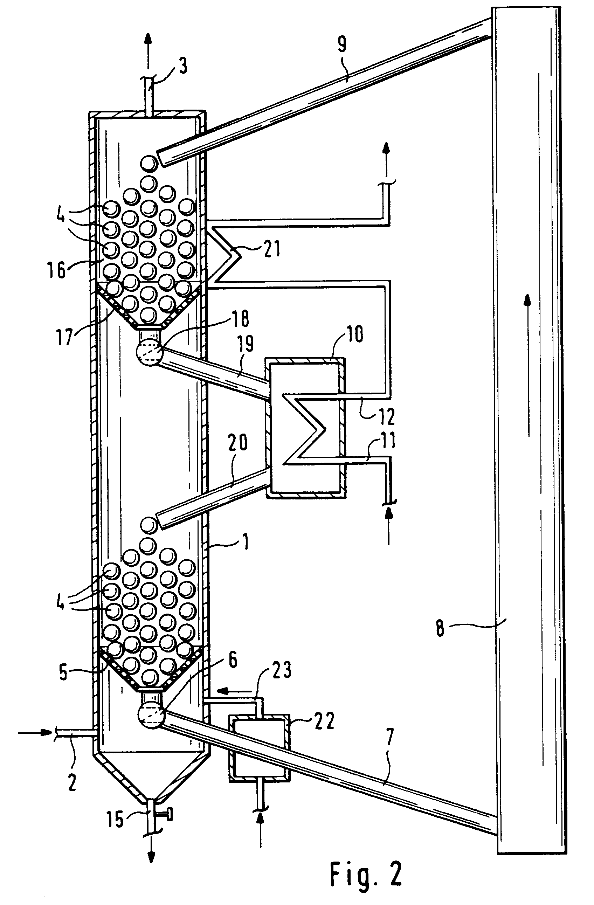

Fig. 2 zeigt eine Variante von Fig. 1, bei welcher für gleiche Anlagenteile die gleichen Bezugsziffern verwendet wurden. Der wesentliche Unterschied besteht darin, daß eine zusätzliche Schüttung 16 von Formkörpern 4 vorgesehen ist, welche ebenfalls auf einem Lochblech 17 liegt und mittels einer Schleuse 18 in Umlauf gebracht werden kann. Die Schüttung 16 ist in den Formkörperspeicher 1 integriert, kann jedoch auch separat angeordnet werden. Aus der Schüttung 16 gelangen die Formkörper 4 durch die Schleuse 18 und das Entnahmerohr 19 in den Wärmeaustauscher 10. Von dort gelangen sie durch das Aufgaberohr 20, welches dem Aufgaberohr 9 von Fig. 1 entspricht, zurück in den Formkörperspeicher 1. Der Wärmeaustauscher 10 wird ebenfalls mit flüssigem Stickstoff beaufschlagt, welcher jedoch, nachdem er durch den Anschluß 12 in gasförmigem Zustand aus dem Wärmeaustauscher 10 abgezogen wurde, noch mittels der Kühlfläche 21 zur Vorkühlung der Schüttung 16 dient. Die Schüttung 16 wird außerdem vom kalten gereinigten Abgas durchströmt, bevor es durch den Anschluß 3 aus der Anlage entfernt wird. Im Unterschied zur Ausführungsform nach Fig. 1 durchlaufen die durch die Schleuse 6 und das Entnahmerohr 7 entnommenen Formkörper noch einen Trockner 22. Zum Trocknen kann gereinigtes Abgas oder Stickstoff dienen. Das Trocknungsmedium wird aus dem Trockner 22 durch die Leitung 23 ebenfalls in den Formkörperspeicher 1 eingespeist, damit die im Trockner 22 von ihm aufgenommenen Kondensat- und Lösungsmittelbestandteile entfernt werden können. Diese Kondensat- und Lösungsmittelbestandteile können auch separat in einem zusätzlichen Kondensator abgetrennt werden.

Die Formkörper können z.B. auch aus Keramik oder Glas bestehen. Sie können auch hohl sein und eine kältespeichernde Füllung enthalten oder beschichtet sein.

## Patentansprüche

1. Verfahren zur Rückgewinnung von in Form von Schadstoffdämpfen aus Abgasen befindlichen Lösungsmitteln durch Kondensieren und Ausfrieren oder Sublimieren an den durch ein Kältemittel abgekühlten Formkörpern (4) eines Formkörperspeichers (1),
dadurch gekennzeichnet,
daß die Abgase kontinuierlich durch den Formkörperspeicher hindurchgeleitet werden und die Anlage anschließend verlassen, wobei die Formkörper im Gegenstrom zum Abgas den Formkörperkreis durchlaufen, der eine Fördereinrichtung (8) und einen Wärmetauscher (10) enthält, daß die ausgefrorenen Substanzen im Formkörperspeicher (1) durch das warme Abgas abgetaut werden und das Kondensat und das abgetaute Eis abgezogen werden und daß der Wärmetauscher mit flüssigem Stickstoff als Kältemittel in einem kontinuierlichen Strom beaufschlagt wird.

2. Verfahren nach Anspruch 1,
dadurch gekennzeichnet,
daß die Formkörper eine zwischen Fördereinrichtung und Wärmetauscher angeordnete Schüttung (16) durchlaufen und dort von kaltem, gereinigtem Abgas vorgekühlt werden.

3. Verfahren nach Anspruch 2,
dadurch gekennzeichnet,
daß die Schüttung zusätzlich durch das verdampfte Kältemittel aus dem Wärmetauscher gekühlt wird.

4. Verfahren nach Anspruch 2 oder 3,
dadurch gekennzeichnet,
daß die Formkörper einen zwischen Formkörperspeicher und Fördereinrichtung befindlichen Trockner (22) durchlaufen.

5. Verfahren nach einem der Ansprüche 1 bis 4,
gekennzeichnet durch die Verwendung von kugelförmigen hohen Stahlkugeln als Formkörper.

6. Vorrichtung zur Durchführung des Verfahrens nach einem der Ansprüche 2 bis 5, mit einem Formkörperspeicher (1), welcher in seinem unteren Teil einen Anschluß (2) zur Abgaszufuhr und in seinem oberen Teil einen Anschluß (3) zur Abgasentnahme besitzt und ferner in seinem unteren Bereich mit einer Schleuse (6) mit Entnahmerohr (7) zur Entnahme von Formkörpern und in seinem oberen Bereich mit einem Aufgaberohr (9) zur Aufgabe von Formkörpern in die Schütttung versehen ist,
wobei
das Entnahmerohr (7) und das Aufgaberohr (9) durch eine Fördereinrichtung (8) für die Formkörper (4) miteinander verbunden sind und ein von flüssigem Stickstoff als Kältemittel beaufschlagter Wärmetauscher (10) vorgesehen ist, der einerseits mit einer an das Aufgaberohr angeschlossenen Schüttung (16) aus Formkörpern (4) durch ein weiteres Entnahmerohr (19) verbunden ist, andererseits mit einem in den Formkörperspeicher (1) mündenden weiteren Aufgaberohr (20) versehen ist, wobei die Schüttung (16) von kaltem gereinigten Abgas durchströmbar ist.

## Claims

1. Method of recovering solvents, which are in the form of pollutant vapours, from waste gases by condensation and freezing out or sublimation on the shaped bodies (4) of a shaped-body reservoir (1), which are cooled down by a refrigerant, characterized in that the waste gases are continuously directed through the shaped-body reservoir and subsequently leave the system, the solid bodies passing through the shaped-body circuit in counterflow to the waste gas, which shaped-body circuit contains a conveying device (8) and a heat-exchanger (10), in that the frozen-out substances in the shaped-body reservoir (1) are defrosted by the hot waste gas, and the condensate and the defrosted ice are drawn off, and in that liquid nitrogen is admitted as refrigerant to the heat exchanger in a continuous flow.

2. Method according to Claim 1, characterized in that the shaped bodies pass through a filling (16) arranged between conveying device and heat exchanger and are precooled there by cold, purified waste gas.

3. Method according to Claim 1, characterized in that the filling is additionally cooled by the vaporized refrigerant from the heat exchanger.

4. Method according to Claim 2 or 3, characterized in that the shaped bodies pass through a drier (22) located between shaped-body reservoir and conveying device.

5. Method according to one of Claims 1 to 4, characterized by the use of spherical, hollow steel balls as shaped bodies.

6. Apparatus for carrying out the method according to one of Claims 2 to 5, comprising a shaped-body reservoir (1), which has in its bottom part a connection (2) for the waste-gas feed and in its top part a connection (3) for the waste-gas extraction and, furthermore, is provided in its bottom region with a lock (6), which has an extraction tube (7) for extracting shaped bodies, and in its top region with a delivery tube (9) for delivering shaped bodies into the filling, the extraction tube (7) and the delivery tube (9) being connected to one another by a conveying device (8) for the shaped bodies (4), and a heat exchanger (10) being provided, to which liquid nitrogen is admitted as refrigerant and which, on the one hand, is connected by a further extraction tube (19) to a filling (16) consisting of shaped bodies (4) which is connected to the delivery tube and, on the other hand, is provided with a further delivery tube (20) leading into the shaped-body reservoir (1), in which case cold, purified waste gas can flow through the filling (16).

## Revendications

1. Procédé de récupération de solvants contenus sous forme de vapeurs polluantes dans les gaz d'échappement, par condensation et congélation ou sublimation sur des pièces de forme (4) refroidies par un agent frigorifique dans un réservoir de pièces de forme (1),
caractérisé en ce qu'
on conduit les gaz d'échappement en continu à travers le réservoir de pièces de forme et on le fait sortir de l'installation,
- les pièces de forme traversant le circuit des pièces de forme à contre-courant des gaz d'échappement, celui-ci comprenant une installation de transfert (8) et un échangeur de chaleur (10),
- on décongèle les substances congelées dans le réservoir (1) avec le gaz d'échappement chaud et on extrait le condensat et la glace fondue et,
- on alimente l'échangeur de chaleur avec de l'azote liquide comme agent frigorifique sous la forme d'un flux continu.

2. Procédé selon la revendication 1,
caractérisé en ce que
les pièces de forme traversent un talus (16) entre l'installation de transfert et l'échangeur de chaleur pour y être pré-refroidies par le gaz d'échappement épuré, froid.

3. Procédé selon la revendication 2,
caractérisé en ce que
le talus est en outre refroidi par l'agent frigorifique évaporé provenant de l'échangeur de chaleur.

4. Procédé selon la revendication 2 ou 3,
caractérisé en ce que
les pièces de forme traversent un séchoir (22) qui se trouve entre le réservoir de pièces de forme et l'installation de transfert.

5. Procédé selon l'une des revendications 1 à 4,
caractérisé par
l'utilisation de pièces de forme constituées par des billes d'acier, creuses, sphériques.

6. Dispositif pour la mise en oeuvre du procédé selon l'une des revendications 2 à 5, comprenant un réservoir à pièces de forme (1) dont la partie inférieure est munie d'un branchement (2) pour l'alimentation en gaz d'échappement et dans sa partie supérieure, d'un branchement (3) pour l'extraction du gaz d'échappement, et en outre dans sa zone inférieure, il est muni d'un sas (6) avec un tube de sortie (7) pour extraire les pièces de forme et dans sa zone supérieure, il est muni d'un tube d'alimentation (9) pour fournir les pièces de forme au talus,
- le tube d'extraction (7) et le tube d'alimentation (9) étant reliés par une installation de transfert (8) des pièces de forme (4) et,
- il est prévu un échangeur de chaleur (10) recevant de l'azote liquide comme agent frigorifique, cet échangeur étant relié d'un côté à un talus (16) relié au tube d'alimentation. Ce talus étant composé de pièces de forme (4), en étant par ailleurs relié à un autre tube d'extraction (19) et de l'autre côté il est relié à un autre tube d'alimentation (20) débouchant dans le réservoir (1), le talus (16) pouvant être traversé par du gaz d'échappement épuré, froid.
